# EUROPÄISCHE PATENTSCHRIFT

(11) **EP 0 537 487 B1**
(45) Veröffentlichungstag und Bekanntmachung des Hinweises auf die Patenterteilung: **24.05.1995**
(21) Anmeldenummer: 92115806.9
(22) Anmeldetag: 16.09.1992
(51) Int. Cl.: F16B 2/20, H02G 15/18, H01R 4/72

(54) **Vorrichtung zum Abdichten des Endbereiches einer wärmegeschrumpften Manschette**
Device for sealing the end portion of a heat-shrinkable sleeve
Dispositif pour rendre étanche la partie terminale d'une manchette thermorétractable

(30) Priorität: 04.10.1991 DE 4132961
(43) Veröffentlichungstag der Anmeldung: 21.04.1993
(73) Patentinhaber: kabelmetal electro GmbH, 30002 Hannover (DE)
(72) Erfinder: Schöttker, Reinhard, W-3061 Lauenhagen (DE); Grajewski, Franz, Dr.-Ing., W-3060 Stadthagen (DE)

(56) Entgegenhaltungen:
- EP-A- 0 443 118
- DE-A- 3 521 367
- DE-A- 3 815 026

## Beschreibung

Die Erfindung betrifft eine Vorrichtung nach dem Oberbegriff des Anspruchs 1.

In einem Prospekt der Firma Raychem "Thermofit Tubing Splice Encapsulation Directions" aus dem Jahre 1968 wird eine Technik vorgestellt, bei der zwei Kabel von einem Ende in eine schrumpfbare Hülse eintreten. Die schrumpfbare Hülse weist an ihrer inneren Oberfläche eine Schicht aus einem Heißschmelzkleber auf. Der zwischen den beiden Kabeln befindliche Bereich der Hülse wird, während die Hülse heiß ist, mit einem zangenartigen Werkzeug zusammengehalten. Während des Schrumpfens wird der Heißschmelzkleber flüssig und wird durch die schrumpfende Hülse in Hohlräume gedrückt. Überschüssiger Heißschmelzkleber tritt am Ende der Hülse aus. Nach dem Erkalten der Abzweiganordnung kann das Werkzeug entfernt werden. Der erkaltete Heißschmelzkleber hält die einander gegenüberliegenden Bereiche zwischen den Kabeln zusammen und dichtet den Eintrittsbereich ab. Wie das zangenartige Werkzeug ausgestaltet ist, wird nicht offenbart.

Aus der DE-PS 2 900 518 ist es bekannt, anstelle des zangenartigen Werkzeugs eine Klammer vom Ende der Hülse her auf den Eintrittsbereich der Hülse zwischen den Kabeln zu schieben. In einer bevorzugten Ausführungsform wird eine Klammer mit drei Schenkeln verwendet, von denen einer innerhalb der Hülse und die beiden anderen außerhalb der Hülse befindlich sind. Der im Innern der Hülse befindliche Schenkel trägt eine Beschichtung aus Heißschmelzkleber. Beim Schrumpferwärmen wird die Wärme über die metallische Klammer in das Innere der Hülse transportiert und bringt dort den Heißschmelzkleber zum Fließen. Diese Technik hat sich bei der Herstellung von Muffen für Nachrichtenkabel durchgesetzt. Das Aufstecken dieser bekannten Klammer ist dann besonders schwierig, wenn das Muffenende schlecht zugänglich ist. Außerdem benötigt der Monteur beide Hände, da es zum Aufstecken der Klammer erforderlich ist, daß der Eintrittsbereich zusammengedrückt wird. Um zu verhindern, daß die Klammer beim Schrumpferwärmen von der Hülse abspringt, müssen bestimmte Vorkehrungen getroffen werden, die die Herstellungskosten für die Klammer in die Höhe treiben. So ist es bekannt, die Klammer mit einem Sägezahnprofil zu versehen bzw. die Klammer aus einer wärmerückstellbaren Metallegierung herzustellen.

Aus der DE-A-38 15 026 ist eine Klammer zur Bildung eines Abzweigs bei schrumpfbaren Kabelmuffen bekannt, die zwei bewegbare Schenkel sowie Fixiermittel für diese Schenkel besitzt. Die Schenkel sind in ihren Verbindungsstegen gegeneinander parallel verschiebbar. Durch Klemmung können die Schenkel in ihrer jeweiligen Lage zueinander fixiert werden. Die Klemmung erfolgt durch Klemmschrauben, die nach dem Aufstecken der Klammer und dem Zusammenfahren der Schenkel festgezogen werden. Auch bei dieser Anordnung muß der Monteur beide Hände zu Hilfe nehmen.

Der vorliegenden Erfindung liegt die Aufgabe zugrunde, die eingangs erwähnte Vorrichtung dahingehend zu verbessern, daß das Aufbringen der Vorrichtung auch nach dem Schrumpferwärmen möglich ist, und daß ein Abspringen der Vorrichtung von der Hülse vermieden ist.

Diese Aufgabe wird durch das im Kennzeichen des Anspruchs 1 Erfaßte gelöst.

Die Vorrichtung nach der Lehre der Erfindung kann nach dem Schrumpferwärmen auf das Ende der Manschette aufgesteckt werden. Anschließend können die Arme der Vorrichtung einander angenähert werden, wobei die einander gegenüberliegenden Bereiche der Manschette in Berührung miteinander gelangen. Der noch fließfähige Heißschmelzkleber wird durch die von den Armen aufgebrachte Kraft in noch etwa vorhandene Hohlräume gepreßt. Überschüssiger Heißschmelzkleber tritt am Ende der Manschette aus dieser aus.

Es besteht jedoch auch die Möglichkeit, die Vorrichtung vor dem Schrumpferwärmen auf den in Rede stehenden Bereich der Manschette aufzubringen. Auch hierbei wird nach dem Aufstecken der Abstand zwischen den Armen soweit verringert, bis beide Arme auf der Außenseite der Manschette aufliegen. Beim Schrumpferwärmen werden die gegenüberliegenden Bereiche zusammengehalten und der überschüssige flüssige Heißschmelzkleber tritt am Ende der Manschette aus.

Das Zusammensetzen des ersten und zweiten Teils kann bereits werksseitig oder auf der Montagestelle erfolgen. Das Zusammenfügen der Teile zu der Vorrichtung erfolgt mit Hilfe der Verbindungsteile, die formschlüssig miteinander verbunden werden. Die formschlüssige Verbindung der Teile erfolgt zweckmäßigerweise durch Rastelemente.

Das Verbindungsteil des ersten Teils besteht aus zwei Balken, die zwischen sich einen Spalt bilden, wogegen das Verbindungsteil des zweiten Teils aus einem in dem Spalt befindlichen Balken besteht.

In dem Kopfstück des zweiten Teils sind beiderseits des Balkens Ausnehmungen vorgesehen, in welche die Enden der Balken des ersten Teils eingreifen.

Entsprechend weist das erste Teil in dem Kopfstück zwischen den Balken eine Ausnehmung auf, in welche das Ende des Balkens des zweiten Teils eingreift. Durch die Ausnehmungen in dem ersten und in dem zweiten Teil sind die Teile gegeneinander beim Zusammenfügen geführt.

Die Ausnehmung des ersten Teils weist Rastelemente auf, in welche auf der Außenseite des Balkens des zweiten Teils befindliche Rastelemente eingreifen. Durch die Rastelemente wird der Abstand zwischen dem ersten und dem zweiten Teil fixiert. Die Rastelemente sind in ausreichender Zahl vorhanden, so daß mehrere unterschiedliche Abstände einstellbar sind. An seinem freien Ende weist der Balken des zweiten Teils einen Schlitz auf und hintergreift die Rastelemente. Dadurch läßt sich das Ende des Balkens etwas zusammendrücken in der Ausnehmung des ersten Teils. Ein einfaches Lösen der Teile ist nicht mehr möglich.

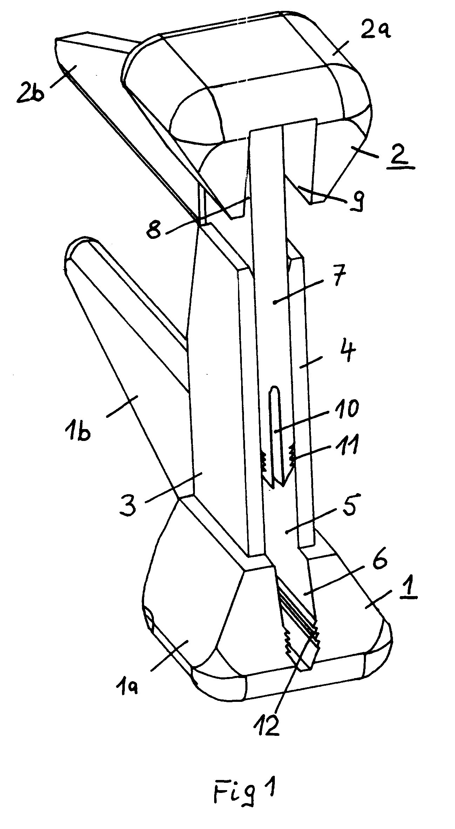

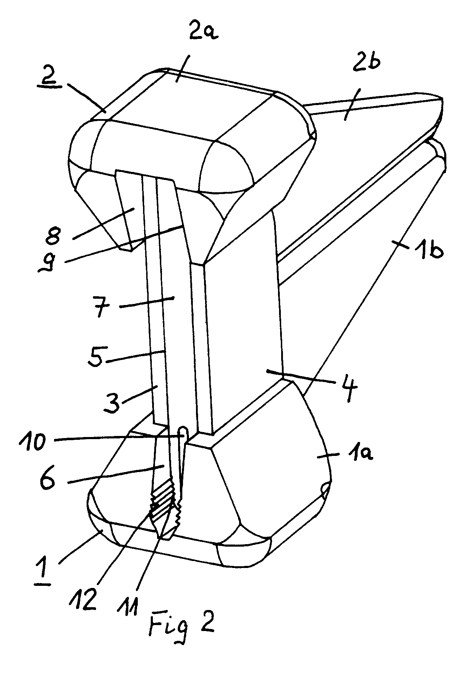

Die Erfindung ist anhand des in den Figuren 1 und 2 schematisch dargestellten Ausführungsbeispiels näher erläutert.

Die Figuren zeigen eine perspektivische Ansicht der Vorrichtung im geöffneten Zustand (Fig. 1) sowie im geschlossenen Zustand (Fig. 2)

Die Vorrichtung besteht aus einem ersten Teil 1 sowie einem zweiten Teil 2. Jedes der Teile 1 und 2 besitzt ein Kopfteil 1a bzw. 2a sowie einen Arm 1b bzw 2b. Die Arme 1b und 2b verlaufen in jeder beliebigen Stellung nahezu parallel zueinander. Beide Teile 1 und 2 weisen Verbindungsteile auf, mit deren Hilfe die Teile 1 und 2 zu der erfindungsgemäßen Vorrichtung zusammenfügbar sind. Das Verbindungsteil des ersten Teils 1 besteht aus zwei Balken 3 und 4, die zwischen sich einen Spalt 5 bilden. Der Spalt 5 erstreckt sich bis in eine Ausnehmung 6 im Kopfteil 1a.

Das Verbindungsteil des zweiten Teils 2 besteht aus einem Balken 7, der Teil des Kopfteils 2a ist. Beiderseits des Fußes des Balkens 7 sind Ausnehmungen 8 und 9 im Kopfteil 2a vorgesehen, deren Breite so bemessen ist, daß die freien Enden der Balken 3 und 4 eindringen können. Am freien Ende des Balkens 7 sind ein Schlitz 10 sowie Rastelemente 11, die im Zusammenbauzustand mit im Bereich der Ausnehmung 6 angeordneten Rastelementen 12 zusammenwirken.

Die Oberfläche der Kopfteile 1a und 2a ist abgerundet, so daß die Teile 1 und 2 bei der Montage und Endabdichtung der Muffe gut in der Hand liegen. Die einander zugekehrten Fläche der Arme 1b und 2b sind ebenfalls abgerundet bzw. im Querschnitt dreieckförmig ausgestaltet.

Das Teil 1 bestehend aus dem Kopfteil 1a, dem Arm 1b sowie den Balken 3 und 4 und das Teil 2 bestehend aus dem Kopfteil 2a, dem Arm 2b sowie dem Balken 7 sind aus einem wärmebeständigen Kunststoff, z.B. Polyamid, Polycarbonat, Polyester oder einer Kunststoffharzpreßmasse zweckmäßigerweise durch Spritzgießen hergestellt. Die Teile 1 und 2 können bereits werksseitig - wie in der Figur 1 dargestellt - zusammengefügt sein, wobei verhindert werden muß, daß die Rastelemente 11 und 12 wirksam werden. Hierzu kann ein nicht dargestelltes Formteil aus, z.B. Wellpappe oder Polystyrol in dem Spalt 5 bzw. Ausnehmung 6 angeordnet werden. Die Teile 1 und 2 können jedoch auch erst an der Montagestelle zusammengefügt werden.

Die Figur 2 zeigt die Vorrichtung im zusammengesetzten, d.h. funktionsfähigen Zustand. Die Arme 1b und 2b liegen in nicht dargestellter Weise auf der äußeren Oberfläche einer wärmegeschrumpften Manschette zwischen den Abzweigkabeln auf. Die Teile 1 und 2 sind formschlüssig mittels der Rastelemente 11 und 12 verbunden.

## Patentansprüche

1. Vorrichtung zum Abdichten des Endbereiches einer eine Abzweigverbindung von elektrischen oder optischen Kabeln umhüllenden wärmegeschrumpften Manschette, welche zwischen den abzweigenden Kabeln an der äußeren Oberfläche der Manschette angreift und die einander gegenüberliegenden Flächenbereiche der Manschette zwischen den Kabeln während der Abkühlung nach dem Schrumpferwärmen der Manschette in Berührung miteinander hält, wobei die Vorrichtung aus einem ersten und einem zweiten Teil (1,2) zusammengesetzt ist und sowohl das erste als auch das zweite Teil (1,2) aus einem Arm (1b,2b), einem sich an einem Ende des Armes (1b,2b) befindlichen Kopfteil (1a,2a) sowie einem aus dem Kopfteil (1a,2a) heraustretenden Verbindungsteil (3,4,7) besteht, welches senkrecht zu den Armen (1b,2b) verläuft, und bei welcher der Abstand zwischen den Armen (1b,2b) derart veränderbar ist, daß bei jedem Abstand zwischen den Armen (1b,2b) diese im wesentlichen parallel zueinander verlaufen, wobei die Verbindungsteile (3,4,7) des ersten und des zweiten Teils (1,2) formschlüssig miteinander verbunden sind, dadurch gekennzeichnet, daß das Verbindungsteil des ersten Teils (1) aus zwei Balken (3,4) besteht, die zwischen sich einen Spalt (5) bilden, wogegen das Verbindungsteil des zweiten Teils (2) aus einem in dem Spalt (5) befindlichen Balken (7) besteht.

2. Vorrichtung nach Anspruch 1, dadurch gekennzeichnet, daß das erste und das zweite Teil (1 und 2) durch Rastelemente (11,12) miteinander verbunden sind.

3. Vorrichtung nach einem der Ansprüche 1 oder 2, dadurch gekennzeichnet, daß in dem Kopfteil (2a) des zweiten Teiles (2) beiderseits des Balkens (7) Ausnehmungen (8,9) vorgesehen sind, in welche die Enden der Balken (3,4) des ersten Teils (1) eingreifen.

4. Vorrichtung nach einem der Ansprüche 1 bis 3, dadurch gekennzeichnet, daß das erste Teil (1) in dem Kopfteil (1a) zwischen den Balken (3,4) eine Ausnehmung (6) aufweist, in welche das Ende des Balkens (7) des zweiten Teiles (2) eingreift.

5. Vorrichtung nach einem der Ansprüche 1 bis 4, dadurch gekennzeichnet, daß die Ausnehmung (6) des ersten Teiles (1) Rastelemente (12) aufweist, in welche auf der Außenseite des Balkens (7) des zweiten Teils (2) befindliche Rastelemente (11) eingreifen.

6. Vorrichtung nach einem der Ansprüche 1 bis 5, dadurch gekennzeichnet, daß der Balken (7) des zweiten Teils (2) an seinem freien Ende einen Schlitz (10) aufweist.

## Claims

1. Device for sealing off the end region of a heat-shrunk sleeve sheathing a branch connection of electrical or optical cables, which device acts between the branching cables on the outer surface of the sleeve and holds in contact with each other the mutually opposite surface regions of the sleeve between the cables during the cooling after heat-shrinking of the sleeve, the device being composed of a first and a second part (1, 2) and both the first and the second part (1, 2) comprising an arm (1b, 2b), a head part (1a, 2a), which is located at one end of the arm (1b, 2b), and also a connecting part (3, 4, 7), which protrudes from the head part (1a, 2a) and runs perpendicularly with respect to the arms (1b, 2b), and in which device the distance between the arms (1b, 2b) is variable in such a way that with every distance between the arms (1b, 2b) they run substantially parallel to each other, the connecting parts (3, 4, 7) of the first and the second part (1, 2) being connected positively to each other, characterized in that the connecting part of the first part (1) comprises two bars (3, 4), which form a gap (5) between them, whereas the connecting part of the second part (2) comprises a bar (7) located in the gap (5).

2. Device according to Claim 1, characterized in that the first and the second part (1 and 2) are connected to each other by detent elements (11, 12).

3. Device according to one of Claims 1 or 2, characterized in that recesses (8, 9), into which the ends of the bars (3, 4) of the first part (1) engage, are provided in the head part (2a) of the second part (2) on both sides of the bar (7).

4. Device according to one of Claims 1 to 3, characterized in that the first part (1) has in the head part (1a) between the bars (3, 4) a recess (6), into which the end of the bar (7) of the second part (2) engages.

5. Device according to one of Claims 1 to 4, characterized in that the recess (6) of the first part (1) has detent elements (12), into which detent elements (11) located on the outside of the bar (7) of the second part (2) engage.

6. Device according to one of Claims 1 to 5, characterized in that the bar (7) of the second part (2) has a slot (10) at its free end.

## Revendications

1. Dispositif pour rendre étanche une manchette thermorétractable qui enveloppe une liaison servant à connecter des câbles électriques ou optiques, qui vient en prise entre les câbles à connecter sur la surface extérieure de la manchette et qui maintient en contact les unes avec les autres les zones de la surface de la manchette qui se font vis à vis entre les câbles pendant le refroidissement, après le thermorétractrage de la manchette, le dispositif se composant d'une première et d'une seconde partie (1,2) et la première comme aussi la seconde partie (1,2) se composant d'un bras (1b,2b), d'une tête (1a,2a) se trouvant à une extrémité du bras (1b,2b), ainsi que d'une pièce de liaison (3,4,7) sortant de la tête (1a,2a), qui s'étend perpendiculairement au bras (1b,2b) et dans le cas duquel on peut modifier l'écartement entre les bras (1b,2b) de telle façon que dans le cas de chaque écartement entre les bras (1b,2b) ceux-ci s'étendent de façon sensiblement parallèle l'un à l'autre, les pièces de liaison (3,4,7) de la première et de la deuxième partie (1,2) étant reliées par engagement positif l'une à l'autre, dispositif caractérisé en ce que la pièce de liaison de la première partie consiste en deux ados (3,4) qui forment entre eux une fente (5), la pièce de liaison de la seconde partie (2) consistant par contre en une âme (7) se trouvant dans la fente (5).

2. Dispositif selon la revendication 1, caractérisé en ce que la première et la seconde partie (1,2) sont reliées l'une à l'autre par des éléments d'encliquetage (11,12).

3. Dispositif selon l'une des revendications 1 ou 2, caractérisé en ce que dans la tête (2a) de la seconde partie (2) on prévoit des deux côtés de l'âme (7) des évidements (8,9) dans lesquels viennent en prise les extrémités des ados (3,4) de la première partie (1).

4. Dispositif selon l'une des revendications 1 à 3 , caractérisé en ce que la première partie (1) présente dans la tête (1a) entre les ados (3,4) un évidement (6) dans lequel vient en prise l'extrémité de l'âme (7) de la seconde partie.

5. Dispositif selon l'une des revendications 1 à 4, caractérisé en ce que l'évidement (6) de la première partie (1) présente des éléments d'encliquetage (12) dans lesquels viennent en prise des éléments d'encliquetage (11) se trouvant sur la face extérieure de l'âme (7) de la seconde partie (2).

6. Dispositif selon l'une des revendications 1 à 5 , caractérisé en ce que l'âme (7) de la deuxième partie (2) présente sur son extrémité libre une fente (10).
